# EUROPEAN PATENT APPLICATION

(11) **EP 3 260 747 A1**
(43) Date of publication of application: **27.12.2017**
(21) Application number: 17158723.1
(22) Date of filing: 01.03.2017
(51) Int. Cl.: F16K 11/083

(54) **FLOW CONTROL VALVE**

(30) Priority: 23.06.2016 EP 16176054
(71) Applicant: Eaton Industrial IP GmbH & Co. KG, 12529 Schönefeld (DE)
(72) Inventor: HILGERT, Andreas, 76547 Sinzheim (DE); NEUMANN, Martin, 76532 Baden-Baden (DE)
(74) Representative: Eaton IP Group EMEA

(57) **Abstract**

Flow control valve, comprising a housing (1) forming a number of internal passages (8) and an internal cavity in fluid communication with each of the internal passages (8) ; and a flow direction block (3) disposed in the internal cavity, the flow direction block (3) having an outer face encircled by an inner face of the internal cavity, wherein the flow direction block (3) comprises two clearances extending through a portion of the flow direction block (3), wherein each of the two clearances is adapted to selectively connect one pair of the four internal passages (89 of the housing (1) when the flow direction block (3) is rotated around a rotation axis relative to the housing (1), thus forming a first flow passage and a second flow passage.

## Description

The invention refers to a flow control valve, comprising a housing forming a number of internal passages and an internal cavity in fluid communication with each of the internal passages; and a flow direction block disposed in the internal cavity, the flow direction block having an outer face encircled by an inner face of the internal cavity, wherein the flow direction block comprises two clearances extending through a portion of the flow direction block, wherein each of the two clearances is adapted to selectively connect one pair of the four internal passages of the housing when the flow direction block is rotated around a rotation axis relative to the housing, thus forming a first flow passage and a second flow passage.

A conventional four-way valve is adapted to accommodate two inlet flows and provide two outlet flows, and can be used where it is desired to switch or alternate the fluid flows to be fed to different parts of a fluid system. By way of example, a fluid flow system might utilize different fluids and, periodically, it is desired to switch or change the fluids which are to be fed into different flow paths of the system. A single valve can switch a pair of inlets and outlets to change the relationships of the inlets and outlets. In EP 1 811 215 B1, for example, there is disclosed a valve wherein the position of a ball closure determines the communicating relationships of the inlets and outlets. By rotating the ball closure, the inlets are selectively placed in communication with the respective outlets. The ball closure for the four-way valve includes two bores to provide two flow paths between the inlets and outlets. One of the problems with such a prior art valve is that by rotating the ball closure, the four-way valve is switched but cannot be controlled in regard of the flow through one of the flow paths, which makes an additional control valve necessary if such a flow control is desired.

It is an objective of the invention to provide a multi-way valve with a rotary flow direction block, which is flow controlled with respect to at least one flow path.

The objective is achieved by the flow control valves of claims 1 and 2. The dependent claims refer to preferred embodiments.

The flow control valve according to the invention comprises a housing forming a number of preferably four internal passages and an internal cavity in fluid communication with each of the internal passages; further a flow direction block disposed in the internal cavity, the flow direction block having an outer face acting together and being encircled by an inner face of the internal cavity, wherein the flow direction block comprises two clearances extending through a portion of the flow direction block, wherein each of the two clearances is adapted to selectively connect one pair of the four internal passages of the housing when the flow direction block is rotated around a rotation axis relative to the housing, thus forming a first flow passage and a second flow passage. It is understood by a person skilled in the art that the flow direction block is formed as a solid of revolution and that the internal cavity is formed complementary to provide the inner face and to allow the rotation of the flow direction block. The solid of revolution may be in the form of a sphere, a spheroid, a cylinder or a cone, for example, whereas other geometries may be applicable as well.

According to the invention, the two clearances are adapted to allow a flow through the first flow passage to be controlled independently of a flow through the second flow passage by way of rotating the flow direction block. Advantageously, the multi-way valve provides a flow control of one of the two flow passages. It is understood by a person skilled in the art that any one of the two flow passages can be controlled, while the other one remains constant. Therefore, the flow control feature is not restricted to a dedicated one of the two clearances, but only one flow passage is controlled at a time. Rotating the flow direction block means, in the sense of the invention, that the flow direction block is rotated from one angular position to another, which angular positions are distanced by only a fraction of a full circle. Rotating the flow direction block through a full circle, once or more, will have no effect, as the flow direction block is back at its starting position after each full circle.

Further according to a first variant of the invention, at least one of the outer face and the inner face comprises a surface coating, for example a hard anodized coating, in order to advantageously enhance a leak-tightness and/or to reduce a friction between the outer face and the inner face. According to a second variant of the invention, an inlay is arranged between the outer face and the inner face, providing similar advantages. The two variants together form one consistent inventive concept. The surface coating and the sealing inlay, besides their advantageous sealing properties, also beneficially reduce the torque required to rotate the flow direction block, and an actuator of the valve may therefore be smaller sized. For the surface coating, established synthetic materials, like PTFE, polyamide-imides or a fluoropolymers compound of PTFE, PFA and FEP, are preferably applicable, as well as ceramics or combinations of ceramics with synthetics are.

A third variant of the invention refers to a combination of the aforementioned first and second variants, i.e. at least one of the outer face and the inner face comprises a surface coating and a sealing inlay is arranged between the outer face and the inner face. The following preferred embodiments may all either be realized in combination with the second variant alone, or in combination with the third variant.

According to a preferred embodiment, each of the internal passages has an orifice to the internal cavity, wherein a coverage of the clearance forming the first flow passage with at least one of the respective orifices is variable by rotating the flow direction block, while a coverage of the clearance forming the second flow passage with the respective orifices remains constant. For example, the flow through the first flow passage is controlled in a range between zero to 100 percent, while the flow through the second flow passage is constantly at 100 percent. Further, the flow through the first flow passage is controlled in a range between zero to 100 percent, while the flow through the second flow passage is constantly zero, provided that the allocation of the orifices to the flow passages has changed in respect to the first example. It is understood by a person skilled in the art that the designation of first and second flow passages are relative and do not define a certain allocation of orifices to the respective flow passages. That means, one of the first and second flow passages is controlled as described, while the respective other flow passage remains constant.

According to a preferred embodiment of the second or third variant, the sealing inlay seals the first flow passage from the second flow passage. More preferably, a groove is provided in either the outer face or the inner face to accommodate the sealing inlay.

According to a further preferred embodiment of the second or third variant, the sealing inlay is provided in form of a closed loop, sealing an area between the outer face and the inner face, which is encircled by the closed loop from an area outside of the closed loop. The terms loop and encircled are to be understood, in the sense of the invention, to be closed, i.e. not to have a beginning and an end. The terms do not refer to a particular form of the sealing inlay, which is particularly not limited to a circular or round form.

According to another preferred embodiment, at least one of the clearances is formed as an open channel into the outer face of the flow direction block. More preferably, both clearances are formed as an open channel into the outer face of the flow direction block. The clearances are thus not formed as bores through the flow direction block, which advantageously allows for an increased margin with regard to the coverage of the respective orifices by the clearances. A further advantage of the clearances formed as open channels is a possible reduction in size of the flow direction block, compared to a ball closure, for example, which accommodates two bores. In addition, due to the smaller size of the flow direction block, the torque required to rotate the flow direction block is also reduced, and an actuator of the valve may therefore be smaller sized and still be able to overcome the torque.

Thus, with at least one clearance formed as an open channel, particularly, at least one of the first flow passage and the second flow passage is formed by the clearance and a part of the inner face, cooperatively. More preferably, both flow passages are formed by the respective clearance and a respective part of the inner face, cooperatively. According to both embodiments, at least the inner face comprises the surface coating. It is an advantage of these preferred embodiments that the respective flow passage is at least comparably as wide as the internal passages are and thus only a minimal pressure drop is incurred in the flow through the respective flow passage.

Preferably, each of the internal passages has an orifice to the internal cavity. A coverage of the clearance forming the first flow passage with one of the orifices is preferably variable by rotating the flow direction block, while a coverage of the clearance forming the second flow passage with another one of the orifices remains constant.

According to a further preferred embodiment of the second or third variant, the open channel of one of the clearances is encircled by the sealing inlay forming the closed loop on the outer face. The inlay sealing is advantageously provided as an o-ring. It is particularly preferred, in case of two open channels, that only one of the two open channels is encircled by the inlay sealing. An advantage of that embodiment is an easier distribution of a lubricant to the inlay sealing.

According to yet another preferred embodiment of the second or third variant, an area of the inner face of the internal cavity is encircled by the sealing inlay forming the closed loop on the inner face, wherein at least a partial area of the encircled area, together with the open channel, forms one of the clearances. The area encircled by the sealing inlay encloses particularly two adjacent orifices of two internal passages.

According to yet another preferred embodiment of the second or third variant, the flow direction block is supported inside the internal cavity by radial bearings, in particular ball bearings, with respect to the rotation axis. The internal cavity is, furthermore preferably, sealed by a radial sealing lip, in particular radially sealing a shaft connecting the motor to the flow direction block.

According to another preferred embodiment, each of the clearances is formed along a straight axis, which means the bottom line of the channel is straight, not curved. In a transversal section through the flow direction block, perpendicular to the rotational axis, the clearances have the form of a segment of a circle. More preferable, the axes of the clearances, or the secants forming the segments of the circle, are running in angled formation to each other in a common plane. Furthermore, preferably the transversal section through the flow direction block is not mirror symmetric, which means that one of the clearances forms a segment of a circle with a greater surface area than the other clearance.

Described in other words, preferably a central part of the flow direction block separating the clearances, is formed as a wedge, in a transverse section perpendicular to the rotation axis, in particular as an asymmetrical wedge.

According to another preferred embodiment, the flow direction block is tapered along the rotation axis. The flow direction block is thus formed as a cone, in particular as a right circular cone, as the flow direction block is necessarily a solid of revolution, and more particular as a frustum of a cone.

It is an advantage of the tapered flow direction block that it provides a more reliable and durable seating arrangement than, for example, a ball closure. The tapered seat, in combination with the sealing surface coating or with the sealing inlay, further provides advantageous sealing properties, so that there is no leakage or at least minimal leakage between the outer face of the flow direction block and the inner face of the internal cavity, and that the flow passes only through the flow passages without bypassing the flow direction block.

According to yet another preferred embodiment, the tapered flow direction block is preloaded against the inner sealing face of the internal cavity. Thus, the sealing properties of the tapered flow direction block is advantageously further optimized. Due to the sealing surface coating or to the sealing inlay, the friction between the flow direction block and the housing is reduced, so that a torque, which is necessary for rotating the flow direction block is advantageously low, even under the preload. The sealing surface coating or the sealing inlay further provide advantageous wear-protection for the inner and outer face. This is particularly advantageous if the valve application calls for the valve to be repeatedly switched over a long lifetime.

According to another embodiment, the flow direction block is pivot-mounted to the inner cavity, by means of a ball bearing, for example, which is preferably arranged on a ground of the internal cavity. This embodiment advantageously further reduces the friction and the necessary torque to rotate the flow direction block. This embodiment may advantageously be combined with the tapered flow direction block. It allows, however, to use a cylindrical flow direction block, as well.

It is an advantage of the flow control valve according to the invention that an absolute position of the flow direction block is easily detectable. Therefore, according to yet another preferred embodiment, a position sensor is arranged in order to provide information on the position of the flow direction block. The flow direction block is preferably fitted with a bar magnet arranged perpendicular to the axis of rotation, the magnetic field being detected by the sensor, which is preferably arranged in a corresponding position on the housing. The position measurement may as well be implemented in the step motor itself, the motor providing information on the current rotation position of the motor and the flow direction block.

The internal passages of the housing may generally be arranged in a common plane, particularly in a plane which is perpendicular to the rotation axis of the flow direction block. Preferably, the internal passages of the housing are arranged in parallel planes, which planes are particularly perpendicular to the rotation axis of the flow direction block, and wherein two or more of the planes may form a common plane.

According to yet another preferred embodiment, each of the preferably four internal passages has an orifice open to the internal cavity, wherein a first orifice is arranged diametrically with respect to a second orifice, and wherein a third orifice and a fourth orifice are each arranged at an angular distance of less than 90° from the second orifice, on opposite sides of the second orifice. This unbalanced arrangement of the orifices around the internal cavity advantageously allows, in combination with features of the flow direction block, to provide for the control of the flow through one of the flow passages, independently of the flow through the other flow passage. The third orifice and the fourth orifice are particularly preferred to be arranged at equal angular distances from the second orifice. Furthermore, according to another preferred embodiment, at least one of the orifices is different to the other orifices with regard to a diameter of the orifices. Depending on the application, the diameter of the orifices, or rather a ratio of the diameters of the orifices may advantageously be adapted to match the specifications according to the application of the valve.

According to yet another preferred embodiment, at least one of the internal passages is bypassed along at least a segment of the internal passage by at least one bypass channel. Each bypass channel is preferably branched off the respective internal passage and opens out into the internal cavity. Furthermore preferably, each bypass channel has a bypass orifice to the internal cavity. Particularly, the bypass orifice and the orifice of the respective internal passage are arranged in a common position along the rotation axis. The bypass channel thus forms a bypass flow passage, if the flow direction block is rotated into the respective position, in which a fluid connection is established from one of the clearances via the bypass orifice, through the bypass channel into the internal passage.

Preferably, at least one of the internal passages is bypassed along at least a segment of the internal passage by two bypass channels, as described before. The second bypass orifice opens into the internal cavity adjacent to the orifice of the respective internal passage, particularly on the opposite side of the first bypass orifice. More preferably, a flow cross-section of each bypass channel is less than a flow cross-section of the internal passage. More preferably, the flow cross-section of each bypass channel is less than ten percent of the flow cross-section of the respective internal passage.

According to the embodiment comprising a bypass channel, that the fluid flow is first established via the bypass flow passage, whereas the fluid flow via the first or second flow passage is established subsequently, when the flow direction block is rotated further in the same direction. It is an advantage of this embodiment, that a more gentle pressure adjustment can be provided. In particular, acoustic issues can be reduced due to this pressure compensation.

The flow control valve according to the invention is advantageously useful in a variety of different applications, including stationary and mobile systems, with different fluids, like hydraulic oil, refrigerant or water, and also with different phases of such fluids.

Another object of the invention refers to a preferred application of the flow control valve according to the invention, which is a refrigerant circuit controlled by the flow control valve, wherein each of the preferably four passages is in fluid communication with a respective port, a first port in connection with a suction line of a compressor, a second port in connection with an output line of the compressor, a third port in connection with a first heat exchanger and a fourth port in connection with a second heat exchanger. The first and second heat exchangers are preferably connected via an expansion valve, closing the refrigerant circuit loop. The compressed refrigerant may either be directed to the first heat exchanger, returning via the expansion valve and the second heat exchanger to the suction line of the compressor, or the compressed refrigerant may be directed to the second heat exchanger, returning via the expansion valve and the first heat exchanger to the suction line of the compressor. Placing the first heat exchanger inside a conditioned space and the second heat exchanger outside, i.e. in an external environment, the refrigerant circuit may advantageously be switched between a heat pump operation and a cooling operation. A preferred use of the refrigerant circuit in an automobile air-conditioning system is a further object of the invention. Another preferred use of the refrigerant circuit is in a stationary air-conditioning system.

The invention will now be described with respect to preferred embodiments. By describing the embodiments in detail, no limitation is made to restrict the full scope of the invention, but a more complete appreciation of the invention and many of the attendant advantages will become apparent, particularly when read in conjunction with the accompanying drawings in which:
Figure 1 shows an exploded assembly drawing of an embodiment of a flow control valve according to the invention, with a driving assembly;
Figure 2 shows a sectional view of the assembled embodiment of Figure 1;
Figure 3 shows a schematic sectional view of a first variation of the embodiment of Figure 2;
Figure 4 shows a schematic sectional view of a second variation of the embodiment of Figure 2;
Figure 5 shows a schematic illustration of a transverse section through a flow direction block and a housing of the embodiment of Figure 1;
Figures 6a to 6h show schematic illustrations of a transverse section through a flow direction block and a housing of another embodiment of the flow control valve according to the invention, with the flow direction block in exemplary functional positions;
Figures 7a to 7d show a housing of yet a further embodiment of the flow control valve according to the invention, in different views;
Figures 8a to 8e show a flow direction block according to a second variant of the invention;
Figures 9a to 9h show schematic illustrations of a transverse section through a flow direction block and a housing of other embodiments of the flow control valve according to the invention, with the flow direction block in exemplary functional positions;
Figure 10 shows a schematic illustration of a transverse section through a further embodiment of the flow control valve with an enhanced sealing arrangement.

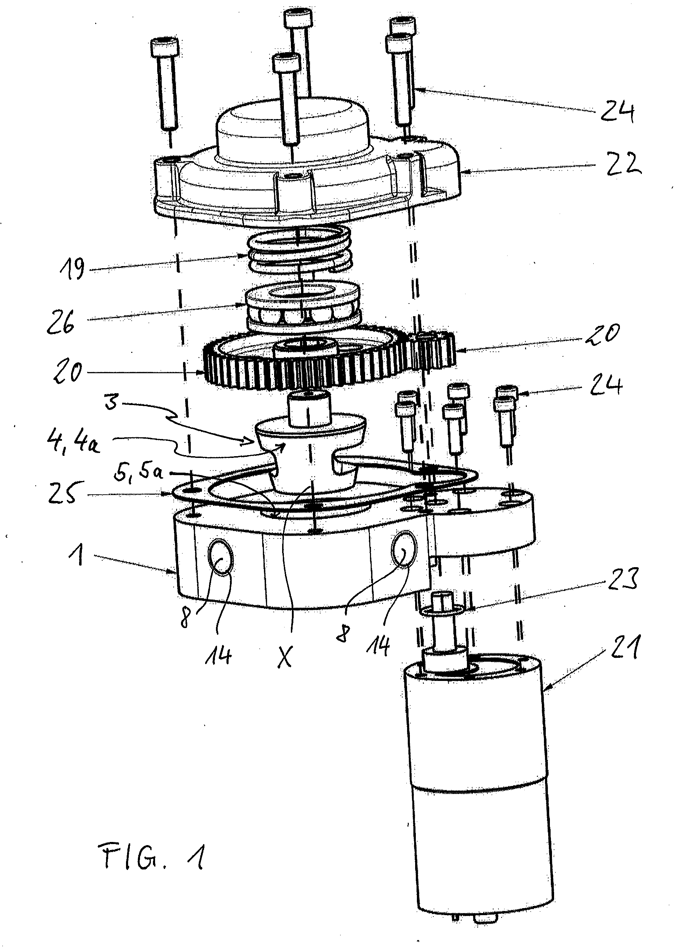

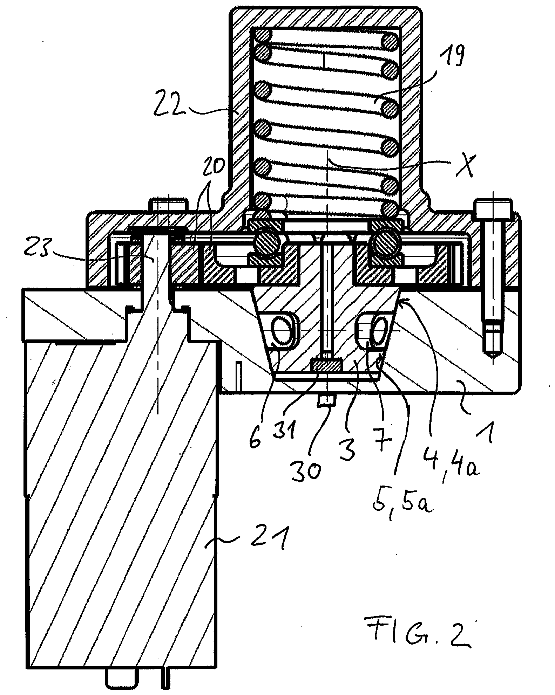

The Figures 1 through 6 refer to a first variant of the invention, including a surface coating 4a, 5a on an outer face 4 and/or on an inner face 5. The Figures 1 and 2, which show different views of a preferred embodiment of a flow control valve according to the invention are described together. The flow control valve according to the invention comprises a housing 1 forming four internal passages 8 and an internal cavity 2 in fluid communication with each of the four internal passages 8. A flow direction block 3 disposed in the internal cavity 2, the flow direction block 3 comprises said outer face 4 acting together and being encircled by said inner face 5 of the internal cavity 2, wherein the flow direction block 3 comprises two clearances 6, 7 extending through a portion of the flow direction block 3, wherein each of the two clearances 6, 7 is adapted to selectively connect one pair of the four internal passages 8 of the housing 1 when the flow direction block 3 is rotated around a rotation axis X relative to the housing 1, thus forming a first flow passage and a second flow passage. According to the invention, the two clearances 6, 7 are adapted to allow a flow through the first flow passage to be controlled independently of a flow through the second flow passage by way of rotating the flow direction block 3. At least one of the outer face 4 and the inner face 5 comprises a surface coating 4a, 5a. Preferably both the outer face 4 and the inner face 5 comprises the surface coating 4a, 5a.

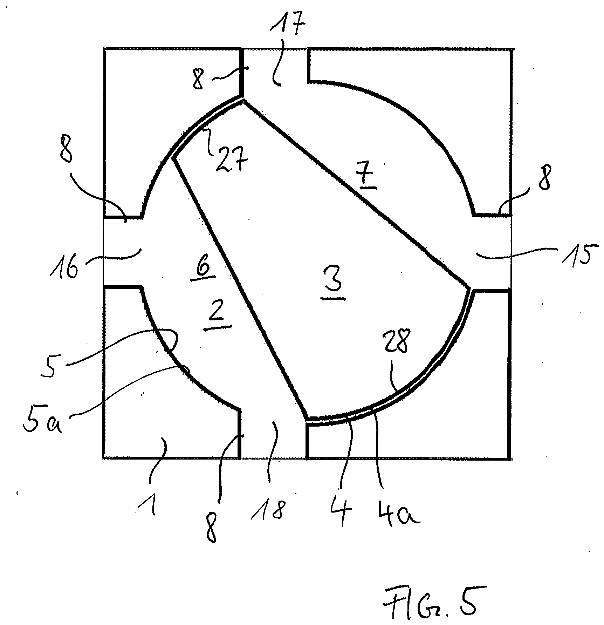

The four internal passages 8 are connected to four ports 14, which are used as inlets and/or outlets connected to an external system (not depicted) that is providing a flow of a liquid or a gas under a certain pressure and temperature to each of the two flow passages. The inner part 3 or flow direction block 3 has the form of a conical puck, which is rotated about the rotational axis X. Depending on the rotation angle, the desired pairs of the internal passages 8 and thus of the inlet and outlet ports 14 will be connected due to positioning the clearances 6, 7 in the form of grooves of the inner flow restrictor 3 or flow direction block 3 over orifices 15-18 (cf. Figure 5), the openings of the internal passages 8 into the internal cavity 2 of the outer valve body 1 or housing 1. Basically, by rotating the flow direction block 3, different functionalities and connections are enabled with the possibility of having a variable flow on one of the flow passages.

A spring 19 is constantly pressing the flow direction block 3 in the form of a conical puck towards a bottom or closed end of the internal cavity 2 with a calculated force in order to maintain the best surface to surface contact between the outer face 4 of the conical puck 3 and the inner face 5 at the inside area or internal cavity 2 of the outer valve body 1 or housing 1. A ball bearing 26 is provided between the spring 19 and the flow direction block 3 to allow the rotation of the flow direction block 3 relative to the spring 19. A set of gears 20 are provided in order to amplify a torque provided by a motor 21 to the conical puck 3 and simplify the assembling relatively to the rotational axis X alignment. In addition to the torque amplification the gears 20 serve a further purpose in allowing for small upwards or downwards movement of the flow direction block 3 as well as slight bending of the inner plug. To achieve this, an engine shaft 23 of the motor 21 is arranged in parallel with respect to the rotational axis X of the flow direction block 3 and the set of gears 20 are capable of compensating for axial displacements.

Several benefits can be achieved using each of the characteristics of the design. In fact, having the rotational aspect of the internal part 3 or flow direction block 3 in compact dimensions makes the flow paths inside the valve very short but wide, therefore a pressure drop is extremely small. Also, a current state of the valve can be determined from the angle of rotation which makes it simpler to add a feedback reading on the state of the system as the rotation can easily be measured.

Adding to the rotational aspect of the internal part 3, the conical shape has further advantages. With the help of the pre-loaded spring 19, the contact pressure can be controlled which leads consequently to an internal leakage control. The duo conical shape of the outer face 4 and the inner face 5 and the spring 19 makes it also possible to hold the position of the valve without external power input due to the contact pressure and the resulting friction. Due to the calculated angle of the cone, the internal part 3 will not get stuck over its lifetime. Finally, one more advantage induced by the conical puck 3 is that in case of leakage into the cap 22 occurs, the pressure in the cap 22 rises and the contact pressure between the valve body 1 and the flow restrictor 3 increases, which leads automatically to an improved sealing in the sense of a self-sealing mechanism.

Furthermore, a position sensor 30 is arranged in order to provide information on the position of the flow direction block 3. The flow direction block 3 is therefore fitted with a bar magnet 31 arranged perpendicular to the axis X of rotation, the magnetic field being detected by the sensor 30, which is arranged on the outside of the valve body 1. Other constructional elements, such as fastening means 24 and a gasket 25 are well known to a person skilled in the art and will thus not be referred to in detail.

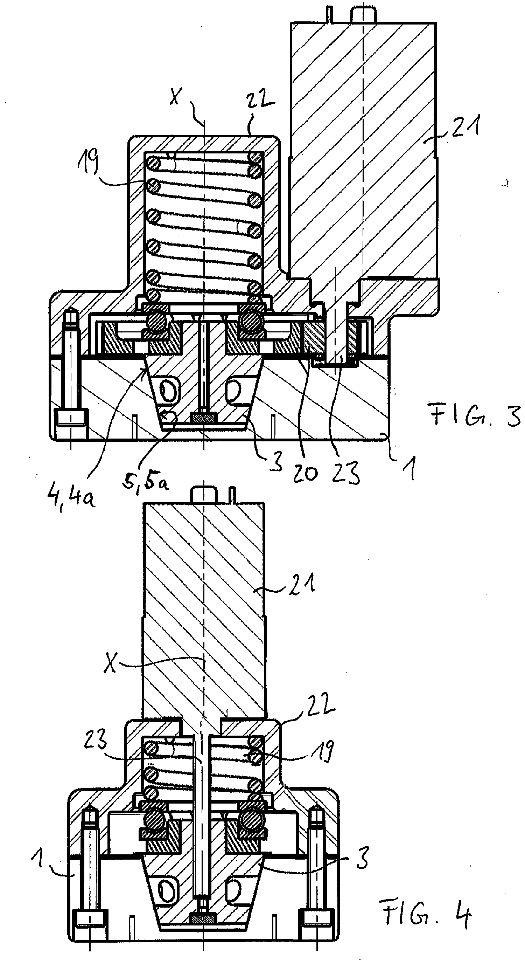

With respect to Figures 3 and 4, which each show a schematic sectional view of a variation of the embodiment of Figure 2, two more embodiments of the flow control valve are described. These embodiments differ from the first described embodiment particularly by the position of the motor 21, relative to the valve body 1 and the flow direction block 3. In the embodiment of Figure 3, with the engine shaft 23 of the motor 21 also being arranged in parallel with respect to the rotational axis X of the flow direction block 3, the gears 20 are able to compensate for axial displacements caused by the flow direction block 3. However, the motor 21 is not arranged opposite to the spring 19 with respect to the valve body 1, as in the embodiment of Figure 2, but adjacent to the spring 19 on the same side of the valve body 1. Figure 4 shows a further embodiment, wherein the motor 21 is arranged on the cap 22 and thus with the engine shaft 23 coaxially aligned to the spring 19 and the rotational axis X of the flow direction block 3. This arrangement is advantageously simple, as no gears are necessary. For compensating axial displacement of the flow direction block 3, however, a respective clutch (not shown) between the motor 21 and the flow direction block 3 would be needed.

In addition, a geometry of the flow direction block 3 is important to consider and will be addressed with respect to Figure 5, which shows a schematic illustration of a section through the flow direction block 3 and a housing 1, transverse in respect to the rotational axis X of Figure 1. The internal passages 8 and the first, second, third and fourth orifices 15-18 may be located in a common plane, as depicted, but may also be arranged in parallel planes. Further, the orifices 15-18 are equal in diameter in this embodiment, which is not necessarily the case. The flow control valve according to the invention can be considered bidirectional as the flow direction on both connected circuits (not shown) does neither affect the pressure drop nor the leakage. The clearances or grooves 6, 7 in the flow restrictor 3 are formed in a way, that the leftover material equals the size of the orifices 15-18, on a first side 27, while the other second side 28 is three times bigger in this embodiment. This specific geometry allows the switching of the flow direction without overlap, as well as the control of the flow of one of the paths continuously from zero to 100 percent without affecting the other flow. Finally, the position of the orifices 15-18 in the internal cavity 2 of the valve body 1 is not evenly distributed. Each of the four internal passages 8 has an orifice 15-18 open to the internal cavity 2, wherein a first orifice 15 is arranged diametrically with respect to a second orifice 16, and wherein a third orifice 17 and a fourth orifice 18 are each arranged at an angular distance of less than 90° from the second orifice 16, on opposite sides of the second orifice 16. This special arrangement of the orifices 15-18 is chosen to advantageously minimize a circumference of the rotating flow control block 3, thus also minimizing the size of the internal cavity 2, in which the flow restrictor 3 is situated.

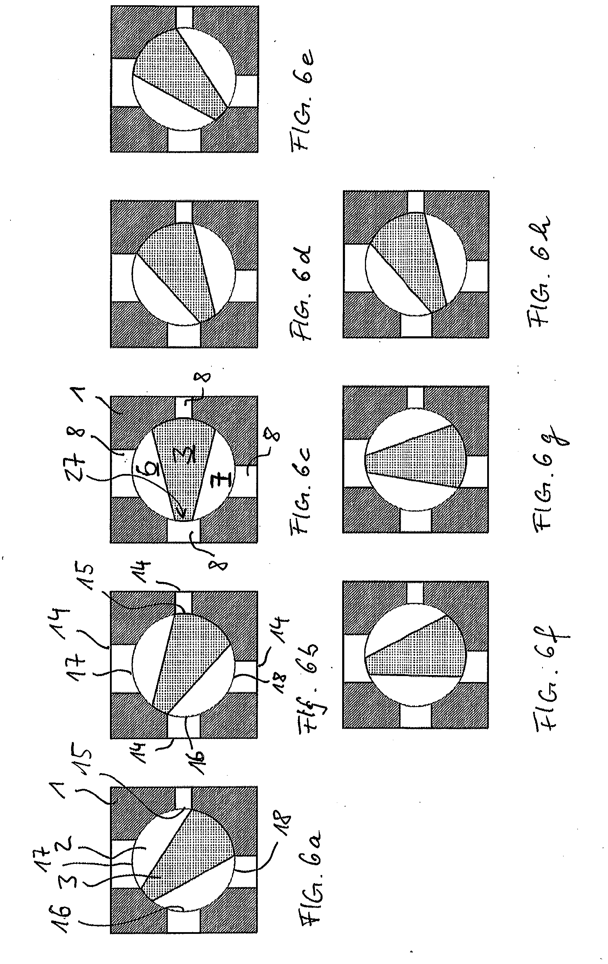

The Figures 6a to 6h show schematic illustrations of a section through a flow direction block 3 and a valve body 1 of another embodiment of the flow control valve according to the invention, with the flow direction block 3 being depicted in six exemplary functional positions. The parts shown in Figures 6a to 6h are identical, and therefore are not provided with reference signs throughout all Figures 6a to 6h. As only the position of the flow direction block 3 changes, the functional states will be understood without reference numerals, as well. First, however, the special features of the embodiment are referred to, before the functional states are further elucidated. According to the embodiment, the four internal passages 8 of the housing 1 are arranged in two parallel planes perpendicular to the rotation axis of the flow direction block 3, wherein the internal passages 8 of the second, third and fourth orifices 16, 17, 18 are arranged in a common plane and the internal passage 8 of the first orifice 15 is arranged in a different plane. The first orifice 15 is further arranged diametrically with respect to the second orifice 16, and the third orifice 17 and the fourth orifice 18 are each arranged at an angular distance of less than 90° from the second orifice 16, on opposite sides of the second orifice 16. Furthermore, according to this embodiment, the orifices 15-18 are different with regard to their diameters. Depending on the application, the diameter of the orifices, or rather a ratio of the diameters of the orifices 15-18 may advantageously be adapted to match the specifications according to the application of the valve. Further, the clearances or grooves 6, 7 in the flow restrictor 3 are formed in a way, that the leftover material is less than the size of the second, third and fourth orifices 16, 17, 18 on the first side 27. This specific geometry allows the switching of the flow direction with overlap, which advantageously avoids a harmful build-up of high pressure during switching operations, which could result from fully closing the orifice 16, if the respective port 14 is connected to a compressor outlet.

The flow control valve according to the invention is advantageously useful in a variety of different applications, including stationary and mobile systems, with different fluids, like hydraulic oil, refrigerant or water, and also with different phases of such fluids. A preferred application of the flow control valve is in an automobile air-conditioning system comprising a heat pump and a cooling mode. The port 14 of the second orifice 16 is, for example, connected to a compressor (not shown) and the port 14 of the first orifice 15 is connected to a return flow of the compressor, whereas the third orifice 17 is connected to a heat exchanger (not shown). The fourth orifice 18 is connected to an air-conditioning condenser. The positions of the flow control block 3 of the Figures 6a to 6e are typically used during normal operation of the air conditioning system, whereas the positions of the flow control block 3 of the Figures 6f, 6g and 6h will only be used for maintenance purposes.

Figure 6a shows the valve with a first flow connection from the compressor via the second orifice 16 to the fourth orifice 18, which provides a cooling air-condition operation, and with a second flow connection from the first orifice 15 to the third orifice 17, which is used for an extraction operation from the heat exchanger. In Figure 6b, the same cooling air-condition operation is provided, without the extraction operation from the heat exchanger, as only the first flow connection from the compressor via the second orifice 16 to the fourth orifice 18 is open. A transitional state of the flow direction block 3 is depicted in Figure 6c, through which the flow direction block 3 is rotated during a switching operation from the cooling air-condition operation to a heat-pump operation, as shown in Figure 6d, and back. It is noted, that a flow is not completely stopped during the switching operation, as the the clearances or grooves 6, 7 in the flow restrictor 3 are formed in a way, that the leftover material is less than the size of the second orifice 16 on the first side 27, thus allowing the switching of the flow direction with overlap. In Figure 6d, the first flow connection is provided from the compressor via the second orifice 16 to the third orifice 17, resulting in a single heat-pump operation. In Figure 6e, the flow direction block 3 is rotated a few degrees further in counter-clockwise direction, in order to open a second flow from the fourth orifice 18 to the first orifice 15 for an extraction operation from the condenser of the air-condition, while the first flow still provides the heat-pump operation.

In Figure 6f, a first maintenance position of the flow direction block 3 is shown, wherein all four orifices 15-18 are open, and which is advantageously used for filling or evacuating the system. Figures 6g and 6h, each show a position of the flow direction block 3 for a purging operation, connecting the first, second and third orifice 15, 16, 17 in Fig 6g, and connecting the second and third orifice 16, 17 in Figure 6h, the latter position being used identically for the purging operation and for the heat-pump operation shown in Figure 6d.

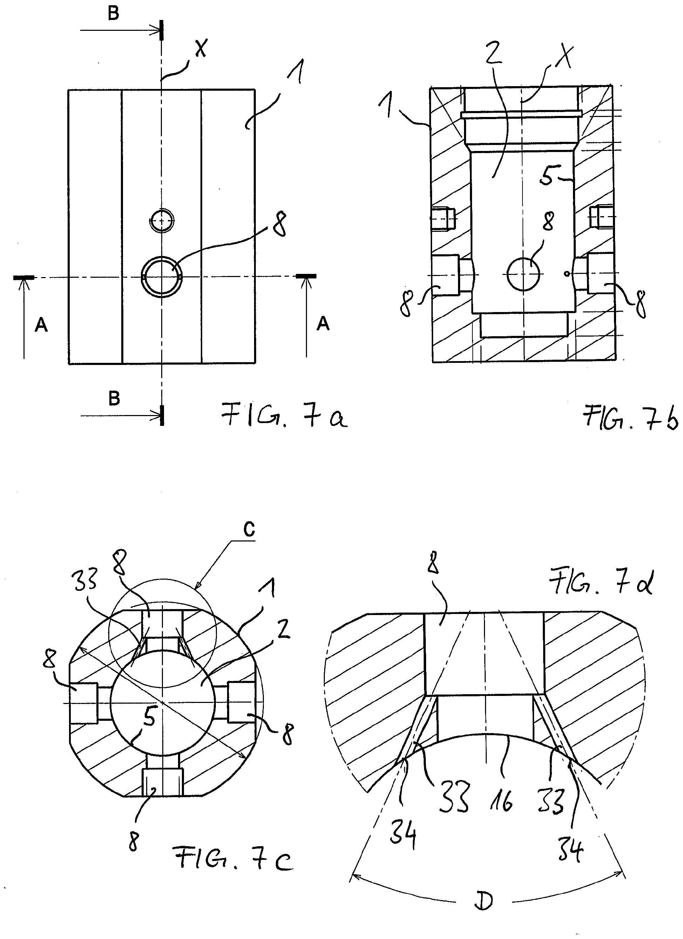

In Figures 7a to 7d, only the housing 1 of yet a further embodiment of the flow control valve according to the invention is depicted in different views, which will be described together. Figure 7a is a side view of the housing 1 with one of the internal passages 8 visible in that view. Figure 7b shows a section B-B through the housing 1 along the rotational axis X, and also through two opposite internal passages 8. The internal cavity 2 has a generally cylindrical inner face 5 in the depicted embodiment. Figure 7c shows a cross section A-A through the housing 1 in a plane perpendicular to the rotational axis X, wherein the four internal passages 8 are arranged in said plane. Figure 7d shows a detail marked C in Figure 7c in enlarged scale, which is further illustrated.

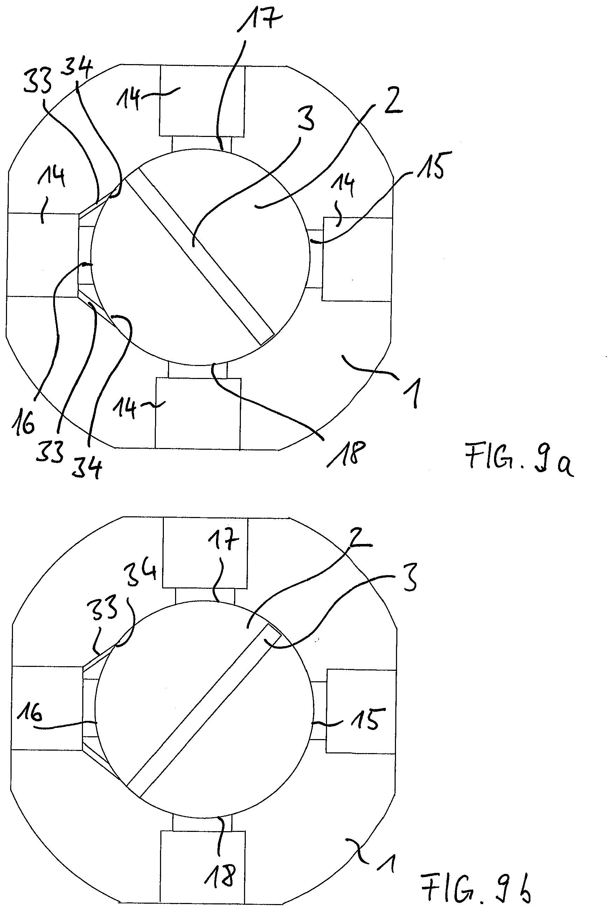

One of the internal passages 8 is bypassed along a segment of the internal passage 8 by two bypass channels 33. Each bypass channel 33 is branched off the respective internal passage 8 and opens out into the internal cavity 2. The bypass channels 33 have each a bypass orifice 34 to the internal cavity 2. The bypass orifices 34 and the orifice of the respective internal passage 8 are arranged in a common position along the rotation axis X, i.e. the bypass orifices 34 and the orifice are arranged laterally adjacent to each other. In the depicted embodiment, the orifice is the one, which has been referred to before as the second orifice 16. The bypass channel 33 form bypass flow passages, which will be described in connection with Figures 9a to 9h.

According to the depicted embodiment, one of the internal passages 8 is bypassed by the two bypass channels 33. However, other internal passages 8 may alternatively or additionally be provided with one or more bypass channels 33. A flow cross-section of each bypass channel 33, however, is preferably smaller than a flow cross-section of the internal passage 8. More preferably, the flow cross-section of each bypass channel 33 is less than ten percent of the flow cross-section of the respective internal passage 8. The two bypass channels 33 run along respective axes, which encircle an angel D of 50 degree in this embodiment, and which are arranged symmetrically with respect to a longitudinal axis of the internal passage 8.

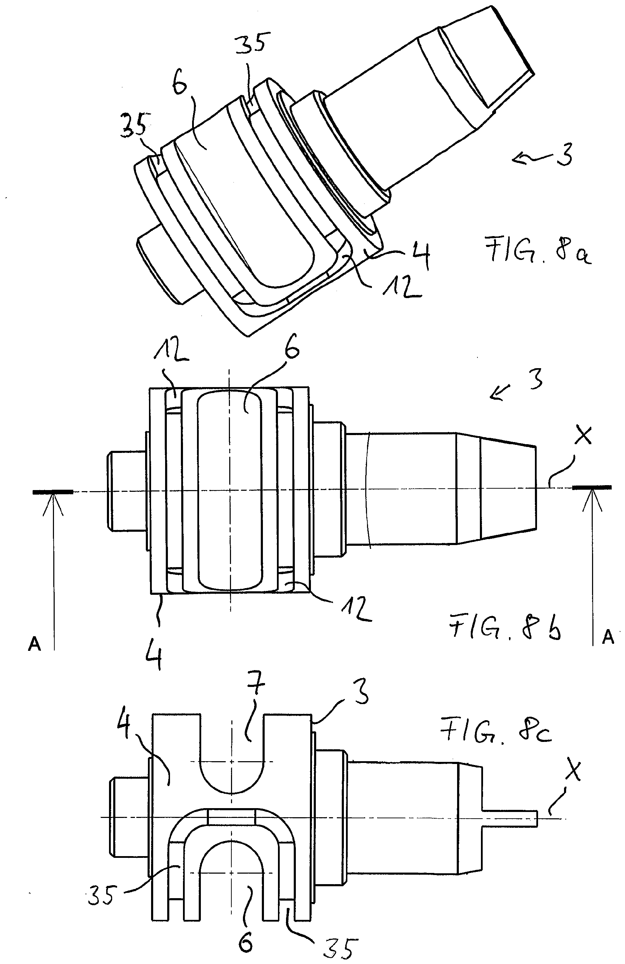

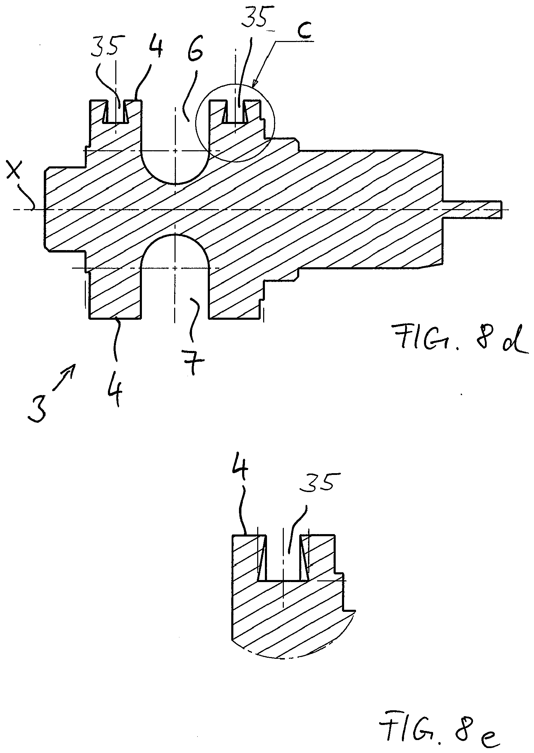

The Figures 8a to 8e refer to a second variant of the invention, including an inlay sealing arranged between the outer face 4 and the inner face 5 (cf. Figures 7b, 7c), to be described hereinafter. However, only the flow direction block 3 is depicted in different views, which will be described together. Figure 8a shows the flow direction block 3 in a perspective side view. Rather, a rotational body is depicted, of which the cylindrical part with the highest diameter is actually the functional part of the flow direction block 3. Figures 8b and 8c are different side views, which are offset 90 degree around the axis X. Figure 8d shows a section A-A along the axis X. In the side view of Figure 8c and the sectional view of Figure 8d, it will be perceived that the two clearances 6, 7 in the form of open channels of the flow direction block 3 are symmetrically arranged with respect to the axis X in this embodiment. So, the remaining part of the flow direction block 3 between the clearances 6, 7 is not wedge-formed here, but rather in the form of a straight ridge.

The open channel forming one of the clearances 6 is encircled by the sealing inlay, which is not depicted, but which is to be inserted into a groove 35, the groove 35 and hence the sealing inlay when inserted, forming a closed loop on the outer face 4 of the flow direction block 3. The inlay sealing may advantageously be provided as an o-ring. It is particularly preferred that of the two open channels 6, 7, only one open channel 6 is encircled by the groove 35 for the inlay sealing. An advantage of that embodiment is an easier distribution of a lubricant to the inlay sealing in the assembled state of the valve. The sealing inlay 12 advantageously seals the first flow passage from the second flow passage. The groove 35 is provided in the outer face 4 to accommodate the sealing inlay. In Figure 8e, a detail marked C in Figure 8d is shown in enlarged scale. The groove 35 is provided with undercuts to securely fasten the inlay sealing in the groove 35, between the outer face 4 and the inner face 5 of the internal cavity 2 (cf. Figures 7b, 7c).

The Figures 9a to 9h show schematic illustrations of a section through a flow direction block 3 and a valve body 1 of further embodiments of the flow control valve according to the invention, with respect to the embodiments of Figures 7a to 7d and 8a to 8e. The flow direction block 3 is depicted in different exemplary functional positions. The parts shown in Figures 9a to 9h are identical, and therefore are not provided with reference signs throughout all Figures 9a to 9h. Besides the position of the flow direction block 3, also the arrangement of the internal passages 8 may be varied. With respect to the arrangement of the internal passages 8, reference is made to the description of Figures 6a to 6h, above. The flow control valve according to the invention is advantageously useful in a variety of different applications, including stationary and mobile systems, with different fluids, like hydraulic oil, refrigerant or water, and also with different phases of such fluids. Furthermore, the flow control valve may be used in connection with gases, where higher pressures apply.

A preferred application of the flow control valve is in an automobile air-conditioning system comprising a heat pump and a cooling mode. The port 14 of the second orifice 16 is, for example, connected to a compressor outlet (not shown) and the port 14 of the first orifice 15 is connected to a return flow of the compressor. The third orifice 17 and the fourth orifice 18 are each connected to condensers (not shown), which are connected and thus form a split condenser, one of which is located inside the air-conditioned room and the other one of which is located outside the air-conditioned room, e.g. the passenger compartment of a vehicle. The third orifice 17 condenser is the inner condenser, which may also be referred to as a heat exchanger. The fourth orifice 18 is connected to the outer condenser. The second orifice 16 is bypassed by two bypass channels 33 with bypass orifices 34 leading into the internal cavity 2.

Figure 9a shows the valve providing a first flow connection from the compressor output via the second orifice 16 and the bypass orifices 34 to the fourth orifice 18, and into the condenser, which is located outside the air-conditioned room. The heat exchanger or inner condenser located inside the air conditioned room provides the cooling air-condition operation in the depicted air-condition mode of the flow control valve according to the invention. A second flow connection is established from the third orifice 17 to the first orifice 15, which provides an extraction operation from the inner condenser or heat exchanger to the compressor suction side or compressor inlet, thus closing the coolant circuit.

A heat-pump operation position of the flow direction block 3 is shown in Figure 9b. The circuit flow compared to the air-condition mode of Figure 9a is reversed, in order to provide a heat-pump mode, operated by the flow control valve according to the invention. The first flow connection is now provided from the compressor outlet via the second orifice 16 and the bypass orifices 34 to the third orifice 17 leading to the inside condenser or heat-pump, which provides heating to the air-conditioned room. The second flow from the outside condenser via the fourth orifice 18 to the first orifice 15 provides an extraction operation from the outer condenser to the suctions side or inlet of the compressor through the first orifice 15, thus closing the heat-pump circuit.

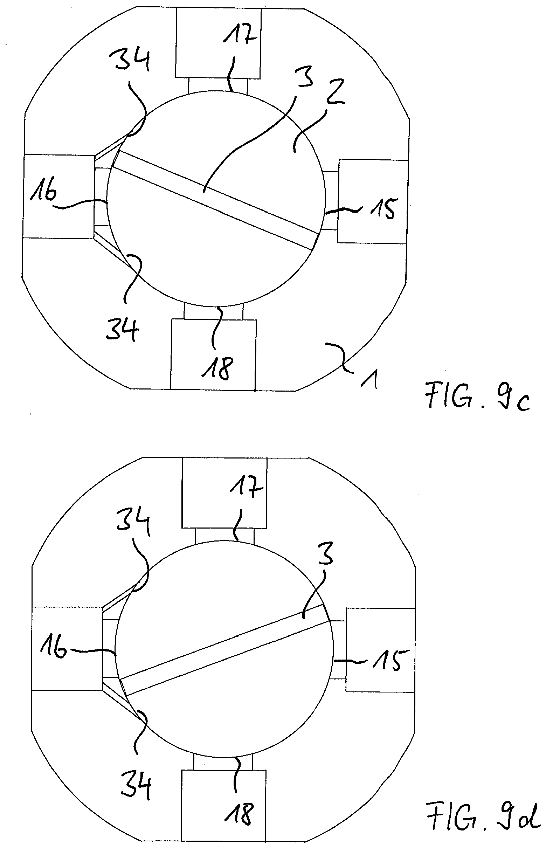

Figure 9c shows the valve providing a first flow connection from the compressor via the second orifice 16 and only one of the bypass orifices 34 to the fourth orifice 18, which provides a modified cooling air-condition operation, as the other one of the bypass orifices 34 is connected to the second flow from the third orifice 17 to the first orifice 15, thus slowly pressurizing the second flow, stopping the extraction operation from the heat exchanger to the compressor return softly. The depicted modified air-condition mode is advantageously applied each time, when the flow control valve is switched from the air-condition mode to the heat-pump mode. The flow direction block 3 will run through the depicted position during that switching operation between the cooling air-condition position of Figure 9a to the heat-pump operation position of Figure 9b. Advantageously the bypass orifices provide a smooth pressure compensation in the modified air condition mode, as a differential pressure of, for example, 15 bar needs to be switched. The smooth pressure compensation prevents liquid coolant to be sucked into the compressor inlet via the first orifice 15. Further, the modified air-condition position prevents acoustic issues of the switching operation. The bypass orifices 34 allow this pressure compensation during the switching operation without the need to switch the flow direction block 3 very slowly to achieve the same effect.

A variant of the heat-pump operation position of Figure 9b is depicted in Figure 9d. The flow direction block 3 is positioned such that the first flow connection is provided from the compressor via the second orifice 16 and only one of the bypass orifices 34 to the third orifice 17 leading to the heat-pump or inner condenser. The other one of the bypass orifices 34 is connected to the second flow from the fourth orifice 18 to the first orifice 15, thus providing a pressure compensation. This modified heat-pump mode is used during switching operations from the heat-pump mode of Figure 9b to the air-condition mode of Figure 9a, during which the flow direction block 3 runs through the position of Figure 9d, thus providing the pressure compensation step during the transition between the different modes, as described above with respect to the Figure 9c.

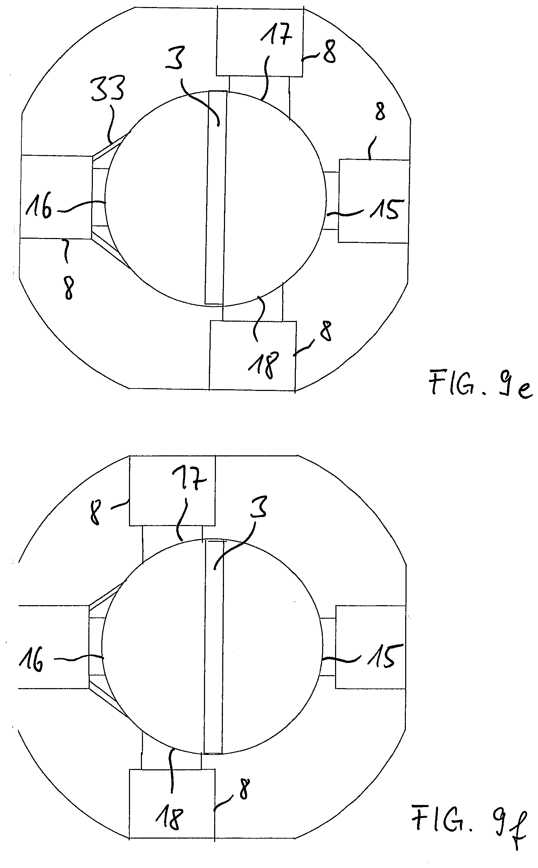

Figures 9e and 9f, respectively, show further embodiments, wherein the third and fourth orifices 17, 18 are offset, either towards the first orifice 15 in Figure 9e or towards the second orifice 16 in Figure 9f. The orifices and internal passages 8 may arbitrarily offset, as long as the functional operating positions are not compromized. The position of the flow direction block 3 in Figures 9e and 9f, respectively, is intended for a purging operation, connecting the first, third and fourth orifice 15, 17, 18 in Fig 7e, and connecting the second, third and fourth orifice 16, 17, 18 in Figure 7f, thus allowing the system to be partly purged. It is noted that in the depicted variants, the operation modes as described with respect to Figures 9a to 9d, may as well be accomplished. Further, the first orifice 15 may instead or additionally the bypassed one, which is bypassed by the two bypass channels 33 with bypass orifices 34 leading into the internal cavity 2.

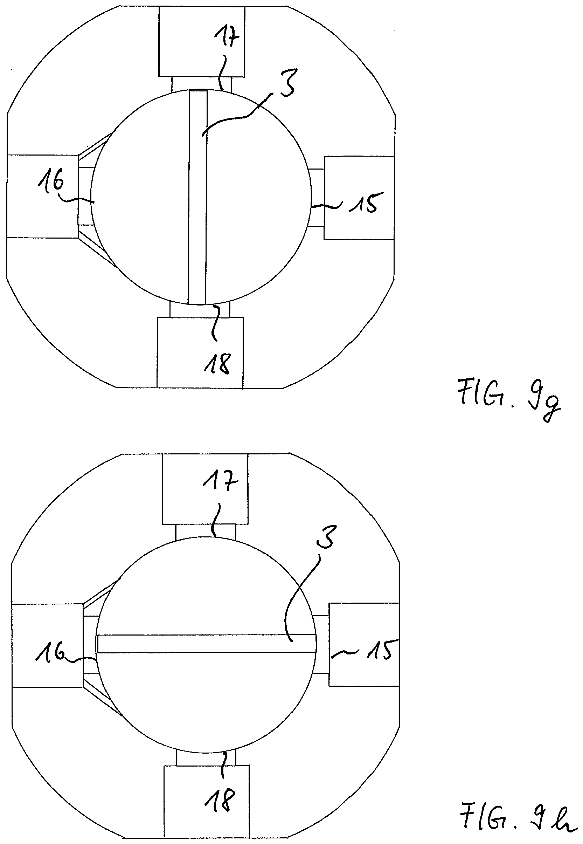

Figures 9g and 9h show the flow direction block 3 in two different maintenance positions, in which all the orifices 15, 16, 17, 18 are largely as possible open. The position may advantageously be used for evacuating and/or filling of the system.

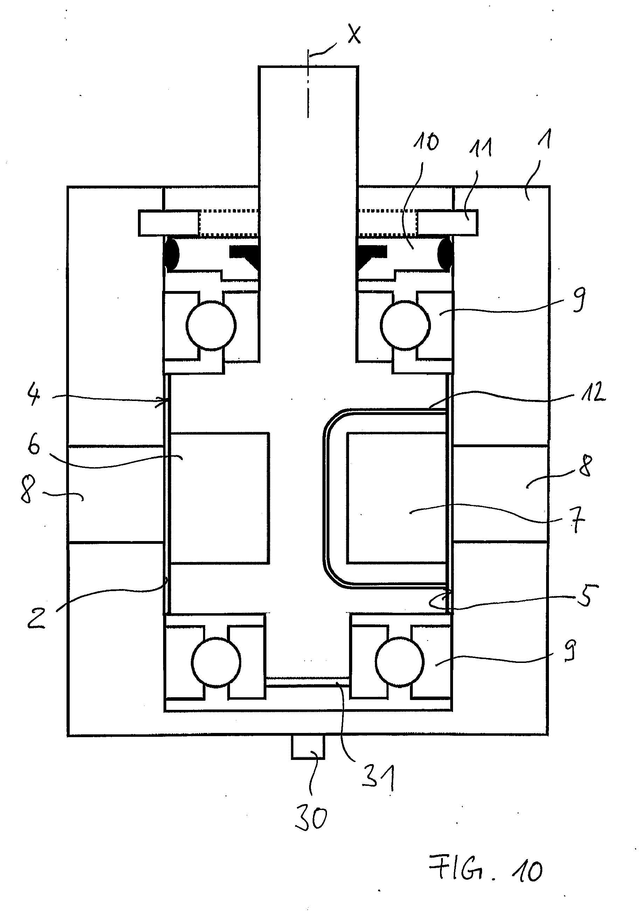

In Figure 10, yet a further embodiment of the flow control valve according to the invention is depicted in a schematic illustration of a section along the rotational axis X of the flow direction block 3. With regard to reducing a torque that is necessary to rotate the flow direction block 3, the flow direction block 3 is not tapered, but cylindrical. The embodiment provides the above mentioned inlay 12 of the second variant of the invention, which is arranged between the outer face 4 and the inner face 5, providing advantageously enhanced leak-tightness and/or reduced friction. The inlay 12 is located in the groove 35, as can be seen in Figures 8a to 8e, which show a similar variant of the flow direction block 3. The groove 35 encircles only one of the recesses 6, 7, here the recess 7, in order to provide lubrication of the outer face 4 and the inner face 5, as well as to open radial bearings 9.

Furthermore, the flow direction block 3 is preferably pivot-mounted to the inner cavity 2, by means of a ball bearing 9, which is arranged on a ground of the internal cavity 2. Preferably, as depicted, the flow direction block 3 is pivot-mounted between two ball bearings 9, providing a certain amount of axial clearance for the flow direction block 3 to allow a movement, e.g. due to thermal expansion, along the axis X of rotation. A retaining ring 11 is held in the valve body 3 to retain a radial sealing ring 10, the ball bearing 9 and the flow direction block 3, the sealing ring 10 sealing said assembly. The internal cavity 2 is thus sealed by the sealing ring 10 or radial sealing lip 10, which in particular radially seals the shaft connecting the (not depicted) motor to the flow direction block 3. Therefore, according to the sealing arrangement shown in Figure 10, the flow direction block 3 is in sliding contact to the inner cavity 2 only via the sealing ring 10 and the sealing inlay 12, thus providing a minimized resistance. Furthermore, a position sensor 30 is arranged in order to provide information on the position of the flow direction block 3. The flow direction block 3 is therefore fitted with a bar magnet 31 arranged perpendicular to the axis X of rotation, the magnetic field being detected by the sensor 30, which is arranged on the outside of the valve body 1.

### Reference Numerals

- 1: Housing, valve body
- 2: Internal cavity
- 3: Flow direction block
- 4: Outer face
- 4a: Outer face surface coating
- 5: Inner face
- 5a: Inner face surface coating
- 6: Clearance
- 7: Clearance
- 8: Internal passages
- 9: Ball bearing
- 10: Radial sealing ring / radial sealing lip
- 11: Retaining ring
- 12: Sealing inlay
- 14: Ports, inlet, outlet
- 15: First orifice
- 16: Second orifice
- 17: Third orifice
- 18: Fourth orifice
- 20: Gears
- 21: Motor
- 22: Cap
- 23: Engine shaft
- 24: Fastening means
- 25: Gasket
- 26: Pivot bearing
- 27: First side of the flow direction block
- 28: Second side of the flow direction block
- 29: Anti-twist device
- 30: Position sensor
- 31: Bar magnet
- 32: Boreholes
- 33: Bypass channels
- 34: Bypass orifice
- 35: Groove
- X: Axis
- A: Section
- B: Section
- C: Detail
- D: Angle

## Claims

1. Flow control valve, comprising
a housing (1) forming a number of internal passages (8) and an internal cavity (2) in fluid communication with each of the internal passages;
a flow direction block (3) disposed in the internal cavity, the flow direction block having an outer face (4) encircled by an inner face (5) of the internal cavity, wherein the flow direction block comprises two clearances (6, 7) extending through a portion of the flow direction block, wherein each of the two clearances is adapted to selectively connect one pair of the internal passages of the housing when the flow direction block is rotated around a rotation axis (X) relative to the housing, thus forming a first flow passage and a second flow passage, wherein the two clearances are adapted to allow a flow through the first flow passage to be controlled independently of a flow through the second flow passage by way of rotating the flow direction block, wherein at least one of the outer face (4) and the inner face (5) comprises a sealing surface coating (4a, 5a).

2. Flow control valve, comprising
a housing (1) forming a number of internal passages (8) and an internal cavity (2) in fluid communication with each of the internal passages;
a flow direction block (3) disposed in the internal cavity, the flow direction block having an outer face (4) encircled by an inner face (5) of the internal cavity, wherein the flow direction block comprises two clearances (6, 7) extending through a portion of the flow direction block, wherein each of the two clearances is adapted to selectively connect one pair of the internal passages of the housing when the flow direction block is rotated around a rotation axis (X) relative to the housing, thus forming a first flow passage and a second flow passage, wherein the two clearances are adapted to allow a flow through the first flow passage to be controlled independently of a flow through the second flow passage by way of rotating the flow direction block, wherein a sealing inlay (12) is arranged between the outer face (4) and the inner face (5).

3. Flow control valve according to claim 2, wherein the sealing inlay (12) seals the first flow passage from the second flow passage.

4. Flow control valve according to any one of claims 2 or 3, wherein a groove (35) is provided in either the outer face (4) or the inner face (5) to accommodate the sealing inlay (12).

5. Flow control valve according to any one of claims 2 through 4, wherein the sealing inlay (12) is provided in form of a closed loop, sealing an area between the outer face (4) and the inner face (5) inside the closed loop from an area outside of the closed loop.

6. Flow control valve according to any one of the preceding claims, wherein at least one of the clearances (6, 7) is formed as an open channel into the outer face (4) of the flow direction block (3).

7. Flow control valve according to claims 5 and 6, wherein the open channel of one of the clearances (6, 7) is encircled by the sealing inlay (12) forming the closed loop on the outer face (4).

8. Flow control valve according to any one of the preceding claims, wherein the flow direction block (3) is supported inside the internal cavity (2) by radial bearings (9) with respect to the rotation axis (X).

9. Flow control valve according to any one of the preceding claims, wherein the internal cavity (2) is sealed by a radial sealing lip (10).

10. Flow control valve according to any one of the preceding claims, wherein at least one of the first flow passage and the second flow passage is formed by the clearance (6, 7) and the inner face (5).

11. Flow control valve according to claims 7 and 10, wherein an area of the inner face (5) is encircled by the sealing inlay (12) forming the closed loop on the inner face (5), wherein the encircled area, together with the open channel, forms one of the clearances (6, 7).

12. Flow control valve according to any one of the preceding claims, wherein each of the internal passages (8) has an orifice (15, 16, 17, 18) to the internal cavity (2), wherein a coverage of the clearance (6, 7) forming the first flow passage with one of the orifices is variable by rotating the flow direction block, while a coverage of the clearance (7, 6) forming the second flow passage with another one of the orifices remains constant.

13. Flow control valve according to any one of the preceding claims, wherein at least one of the internal passages (8) is bypassed along at least a segment of the internal passage (8) by at least one bypass channel (33).

14. Flow control valve according to claims 12 and 13, wherein each bypass channel (33) is branched off the respective internal passage (8) and opens out into the internal cavity (2).

15. Flow control valve according to claim 14, wherein each bypass channel (33) has at least one bypass orifice (34) to the internal cavity (2), the bypass orifices (34) and the orifices (15, 16, 17, 18) of the respective internal passage (8) being arranged in a common position along the rotation axis (X).
